# DEMANDE DE BREVET EUROPEEN

(11) **EP 1 997 694 A1**
(43) Date de publication de la demande: **03.12.2008**
(21) Numéro de dépôt: 07109238.1
(22) Date de dépôt: 30.05.2007
(51) Int. Cl.: B60R 21/34, B62D 25/08

(54) **Véhicule comprenant un support muni d'une butée absorbant l'énergie d'un choc**

(71) Demandeur: Cadence Innovation, 27950 Saint Marcel (FR)
(72) Inventeur: Toitgans, Marc-Philippe, 27510 MEZIERES EN VEXIN (FR)
(74) Mandataire: Texier, Christian

(57) **Abrégé**

Le véhicule comprend un élément de carrosserie, un support (6) et au moins une butée, cette butée (60, 62) ou au moins l'une des butées étant agencée pour s'écraser en cas de choc d'un piéton contre l'élément de carrosserie en direction de la butée.

## Description

L'invention concerne les véhicules automobiles et en particulier la partie avant de ceux-ci.

Les véhicules sont aujourd'hui conçus pour protéger les piétons en cas de collision. On s'intéresse ici, en particulier mais non exclusivement, au choc de la tête ou de la hanche du piéton avec le véhicule. Une particularité de ces chocs est qu'ils nécessitent d'amortir l'impact du piéton pour éviter de le blesser. Les valeurs considérées pour limiter les risques de blessure sont les critères biomécaniques sur des impacteurs sous système : accélération, de la hanche ou de la jambe, moment de flexion de la hanche ou angle de la jambe, cisaillement du genou.

Dans ce contexte, différents agencements de véhicules ont été envisagés.

On a imaginé de protéger le piéton au niveau de la tête ou de la hanche en laissant un espace entre l'élément de carrosserie destiné à recevoir le piéton et un point dur du véhicule se trouvant derrière cet élément de carrosserie. Ainsi, cet espace génère une course utile pour ralentir le piéton et réduire sa vitesse avant qu'il entre en contact avec le point dur, de sorte que c'est la carrosserie qui absorbe une partie au moins de l'énergie du choc. Si le fait de ménager un espace qui génère une course de débattement pour l'élément de carrosserie en cas de choc s'avère avantageux, il faut néanmoins trouver cet espace au sein du véhicule, ce qui est une contrainte forte en termes de style et d'architecture de l'avant du véhicule. De plus, la course dépend de l'énergie que peut absorber la carrosserie.

Une autre solution a été envisagée qui consiste à prévoir des butées fusibles qui, au-delà d'un certain effort, cèdent pour offrir un espace de débattement à l'élément de carrosserie et lui permettent ainsi en se débattant d'absorber une partie au moins de l'énergie du choc. Elle autorise de prévoir quelques interfaces avec l'élément de carrosserie dans la zone à condition qu'elles soient également fusibles. Un exemple de cet agencement est divulgué dans le document FR-2 866 622. Toutefois, cette solution nécessite aussi de ménager une course pour le débattement et l'espace nécessaire au débattement demeure une contrainte en termes de style et d'architecture.

Un but de l'invention est de proposer une autre solution face à la problématique du choc piéton.

A cet effet, on prévoit selon l'invention un véhicule comprenant :
- au moins un élément de carrosserie ; et
- au moins une butée, située à une hauteur supérieure à celle d'une poutre de pare-chocs du véhicule, agencée pour s'écraser en cas de choc d'un piéton contre l'élément de carrosserie en direction de la butée.

Ainsi, la butée, en s'écrasant, absorbe une partie au moins de l'énergie du choc pour limiter les blessures sur le piéton. Par rapport à l'espace occupé par la butée, la quantité d'énergie pouvant ainsi être absorbée est bien supérieure à celle absorbée dans les solutions précitées, à savoir la déformation de la carrosserie grâce à l'espace libre ou encore la pièce fusible. Tout comme la pièce fusible, la butée peut servir de support pour l'élément de carrosserie tant qu'un choc n'est pas intervenu.

Le véhicule selon l'invention pourra présenter en outre au moins l'une quelconque des caractéristiques suivantes :
- la butée ou l'une au moins des butées est en matériau plastique ou composite ;
- le véhicule présente un espace entre la butée ou l'une au moins des butées et l'élément de carrosserie ;
- l'espace est occupé au moins en partie par un amortisseur élastique ;
- les butées agencées pour s'écraser sont au moins au nombre de deux et par exemple au nombre de trois ;
- la butée ou au moins l'une des butées est adjacente à une serrure du véhicule ;
- le véhicule comprend un support, la butée ou au moins l'une des butées étant d'une seule pièce avec le support ;
- le support est agencé pour former un point d'appui rigide pour un piéton lors d'un choc du piéton contre le pare-chocs du véhicule ;
- le support est agencé pour que le point d'appui fasse basculer le piéton sur le véhicule ;
- le support comprend des nervures avant planes verticales parallèles à la direction de marche du véhicule et formant le point d'appui ;
- les nervures étant des nervures principales, le support comprend des nervures secondaires contiguës aux nervures principales et non parallèles à ces dernières ;
- le support comprend des nervures arrières ;
- le support est agencé pour canaliser sous le support un flux d'air entrant dans le véhicule ;
- le support est fixé à une façade avant technique du véhicule ;
- le support est en appui sur une façade ou une pièce de structure du véhicule ;
- le véhicule comprend une peau de pare-chocs fixée au support ;
- le support est l'une des pièces suivantes :
   - une doublure de capot ;
   - une façade avant technique ;
   - un support de serrure ; et
   - un support d'aile ; et
- le support est un support de calandre.

On prévoit également selon l'invention un support d'élément de carrosserie faisant partie d'un véhicule selon l'invention et tel qu'énoncé ci-dessus.

D'autres caractéristiques et avantages de l'invention apparaîtront encore dans la description suivante d'un mode préféré de réalisation donné à titre d'exemple non limitatif en référence aux dessins annexés sur lesquels :
- la figure 1 est une vue de profil de la partie avant d'un véhicule selon un mode préféré de réalisation de l'invention ;
- la figure 2 est une vue de trois quarts face illustrant la calandre et le support de calandre du véhicule de la figure 1 ;
- les figures 3 à 5 sont des vues en perspective respectivement de l'avant pour la figure 3 et de l'arrière pour les figures 4 et 5 du support de calandre du véhicule de la figure 1 ;
- les figures 6 et 7 illustrent deux détails du support de calandre de la figure 4 à plus grande échelle ;
- la figure 8 est une vue du support de calandre de la figure 4 dans son environnement au sein du véhicule ;
- les figures 9 à 12 et 13 à 15 sont deux séries de vues illustrant la cinématique du comportement du véhicule de la figure 1 lors de tests de choc dits « tête d'enfant » et « hanches » ;
- les figures 16 à 23 illustrent la cinématique du comportement du véhicule lors d'un test de choc de type « jambe » ;
- la figure 24 est une vue synthétisant la cinématique du test des figures 16 à 23 ;
- la figure 25 est une vue analogue à la figure 1 montrant l'entrée d'air dans l'avant du véhicule ; et
- la figure 26 est une vue en perspective de l'avant du véhicule.

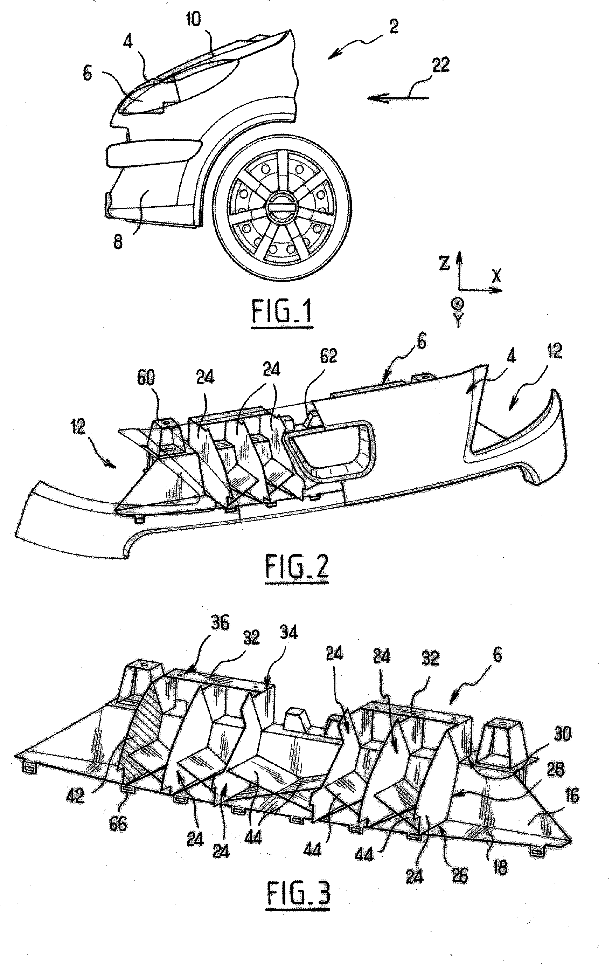

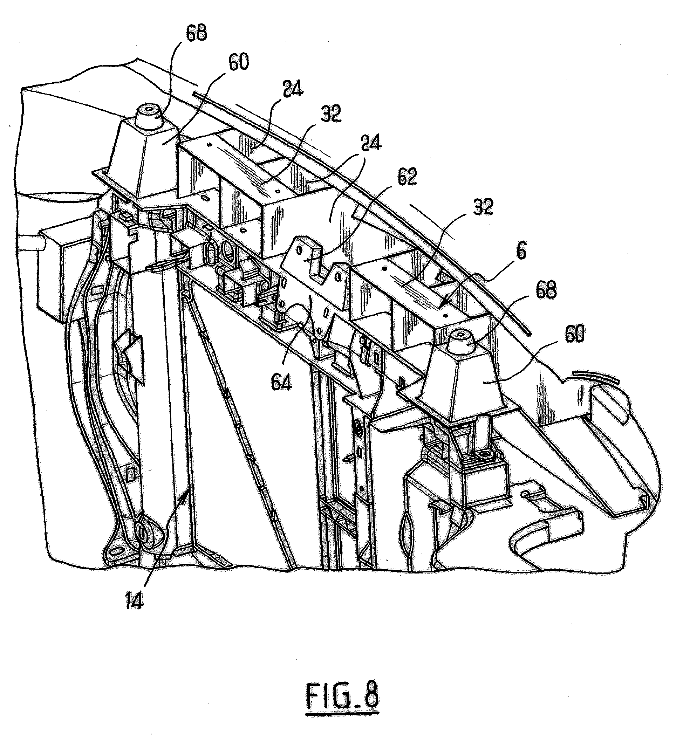

On a illustré à la figure 1 la partie avant d'un véhicule 2 selon l'invention. Comme illustré aux figures 2 à 8, le véhicule comprend une calandre 4 ou *soft nose* ainsi qu'un support de calandre 6 s'étendant derrière cette dernière. Le véhicule comprend une peau de pare-chocs 8 s'étendant au-dessous de la calandre 4 ainsi qu'un capot 10 s'étendant au-dessus et à l'arrière de la calandre dans le prolongement de cette dernière. La calandre 4 qui a une forme allongée présente à ses deux extrémités latérales des logements 12 pour des projecteurs du véhicule. Derrière et/ou au-dessous du support de calandre s'étend notamment la façade avant technique 14 du véhicule. Le véhicule comprend une poutre de pare-chocs non représentée supportant la peau de pare-chocs 8. Le support 4 est distinct de cette poutre. La calandre 4 s'étend à une hauteur supérieure à la poutre de pare-chocs.

Le support de calandre comprend trois parois principales planes 16, 18 et 20. La paroi 16 est verticale et s'étend dans un plan perpendiculaire à la direction de marche 22 du véhicule. Les parois 18 et 20, respectivement inférieure avant et supérieure arrière, sont parallèles l'une à l'autre et s'étendent à partir des bords respectifs inférieur et supérieur de la paroi 16, respectivement vers l'avant et vers l'arrière par référence à la direction de marche du véhicule illustrée par la flèche 22 à la figure 1.

Le support 6 comprend une série de nervures 24 qui sont en l'espèce au nombre de six. Les nervures 24 sont planes, parallèles entre elles et s'étendent à distance les unes des autres. Chaque nervure s'étend dans un plan vertical parallèle à la direction de marche 22 du véhicule. Chaque nervure présente un bord inférieur 26 contigu à la face supérieure de la paroi inférieure 18, un bord arrière 28 contigu à la face avant de la paroi verticale 16 et un bord arrière 30 contigu à la face supérieure de la paroi supérieure 20. Chacun de ces bords assure un contact linéaire avec la paroi associée. Les nervures 24 sont disposées en deux groupes de trois nervures, symétriquement par rapport à un plan vertical de symétrie du support 6 correspondant au plan longitudinal médian du véhicule.

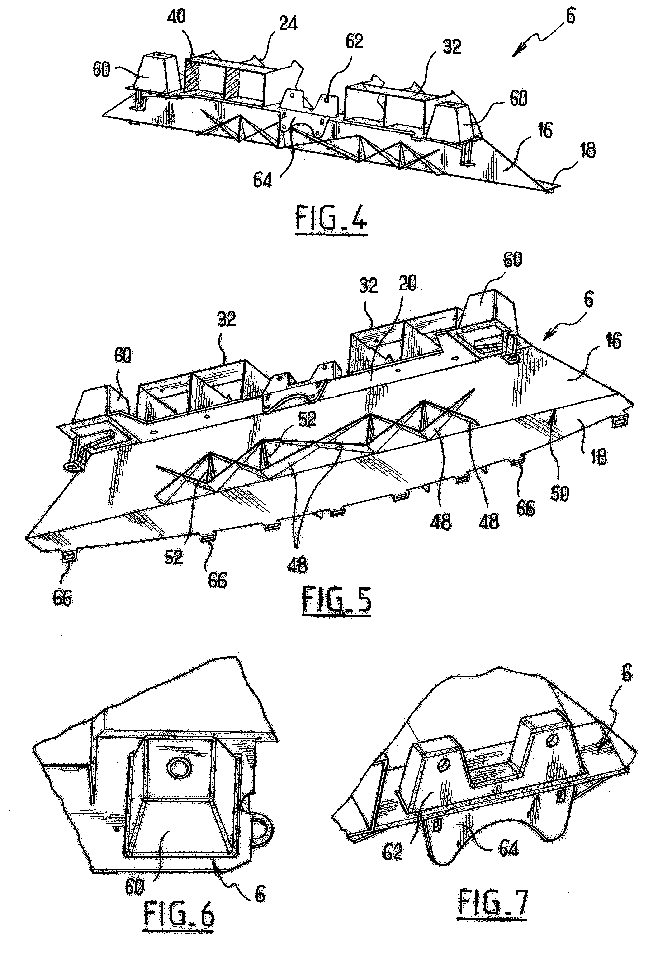

Le support 6 comprend deux platines 32, chacune horizontale de forme plane rectangulaire, fixées à des bords supérieurs 34 des nervures. Chaque trio de nervures avec la platine 32 associée et la partie de paroi supérieure 20 située sous elle forme donc deux caissons ou deux cellules. Les platines 32 servent à fixer la calandre en partie supérieure et présentent à cette fin quatre perçages 36 pour des vis. La fixation s'effectue ici suivant l'axe vertical ou axe Z. La partie de chaque nervure s'étendant au droit de la platine 32 associée est dimensionnée de sorte que les points de fixation ainsi réalisés ne se comportent pas comme des points durs lors d'un choc du véhicule avec un piéton comme on le verra dans la suite. II s'agit des parties référencées 40 et hachurées pour certaines d'entre elles sur la figure 4.

Dans le présent exemple, on prévoit que la calandre soit rigide suivant la direction X, c'est-à-dire la direction de marche du véhicule, et/ou la direction XZ, c'est-à-dire la direction située à 45° entre la direction de marche et la direction verticale. Cette rigidité est permise par le support de calandre lui-même grâce à la partie avant des nervures 24. Cette partie avant, qui a été hachurée pour plus de clarté sur l'une des nervures de la figure 3, couvre toute la partie de la nervure s'étendant au droit du bord inférieur 26 de la nervure et en avant de son bord arrière 28.

Pour éviter que ces parties 42 des nervures ne se déforment elles-mêmes lors d'un choc et afin, par conséquent, qu'elles aient une rigidité suffisante, elles sont en l'espèce renforcées par des nervures secondaires 44 disposées par paires de nervures entre les nervures principales 24 adjacentes. Entre chaque paire de nervures 24, on trouve donc une paire de nervures secondaires 44 qui s'interceptent pour former une croix. Chaque nervure 44 s'étend depuis la partie médiane de l'une des deux nervures principales jusqu'à la partie inférieure de l'autre nervure principale.

Enfin, comme illustré aux figures 4 et 5, le support 6, quant à lui, prend appui sur la structure du véhicule ou la façade avant technique 14 et éventuellement les deux à la fois au moyen d'un ensemble de nervures 48 ayant une disposition similaire à celle des nervures 44 et bien que les nervures principales soient absentes de la face arrière. On trouve donc en saillie de la face arrière de la paroi 16 trois paires de nervures arrières 48, les nervures de chaque paire se croisant et ayant chacune un bord contigu à l'arrête 50 formée par la jonction entre les parois 16 et 18. Quatre nervures de renfort 52 s'étendant dans des plans verticaux parallèles à la direction de marche du véhicule sont prévues aux points de contact des paires de nervures 48. Les nervures 44, tout comme les nervures 48, s'étendent parallèlement à la direction de marche du véhicule et sont inclinées par rapport à la direction transversale Y.

Les nervures 24, 44 et 48 forment des réseaux de cellules fermées.

Le support 6 comprend en l'espèce trois butées 60 et 62. Les deux butées 60 sont identiques l'une à l'autre et s'étendent aux extrémités gauche et droite de la paroi supérieure 20, en saillie de la face supérieure de cette dernière. Chaque butée 60 a la forme d'une pyramide tronquée à quatre côtés, le sommet de la pyramide étant parallèle à sa base.

La butée 62 s'étend à mi-distance des extrémités du support. II s'agit d'une butée destinée à servir de point de fixation pour une serrure du capot 10. La butée s'étend elle aussi en saillie de la face supérieure de la paroi supérieure 20.

Au-dessous de la butée 62, à partir de la face inférieure de la paroi supérieure 20 s'étend une platine 64 présentant des orifices pour la fixation par vissage de la façade avant technique 14 au support 6. Cette liaison entre le support et la façade est propre au cas d'espèce et n'est pas indispensable.

Le support 6 présente des pattes de clipsage 66, ici au nombre de 7, prévues pour la fixation par clipsage du bord supérieur de la peau de pare-chocs 8.

Chacune des deux butées 60 est surmontée par un élément d'amortissement élastique 68, par exemple en élastomère, occupant une partie de l'espace entre la butée et le capot.

Les butées 60 et 62 s'étendent à une hauteur supérieure à celle de la poutre de pare-chocs et même en l'espèce supérieure à celle du pare-chocs dans son ensemble.

Les butées 60 et 62 sont prévues pour s'écraser lors d'un choc piéton, comme on va le voir dans les tests dont la cinématique va être présentée. Par écrasement, on veut signifier que la butée se déforme et se casse intérieurement (en absorbant de l'énergie). Après cet écrasement, elle peut se déplacer pour s'escamoter mais le rôle de la butée n'est pas restreint à ce déplacement.

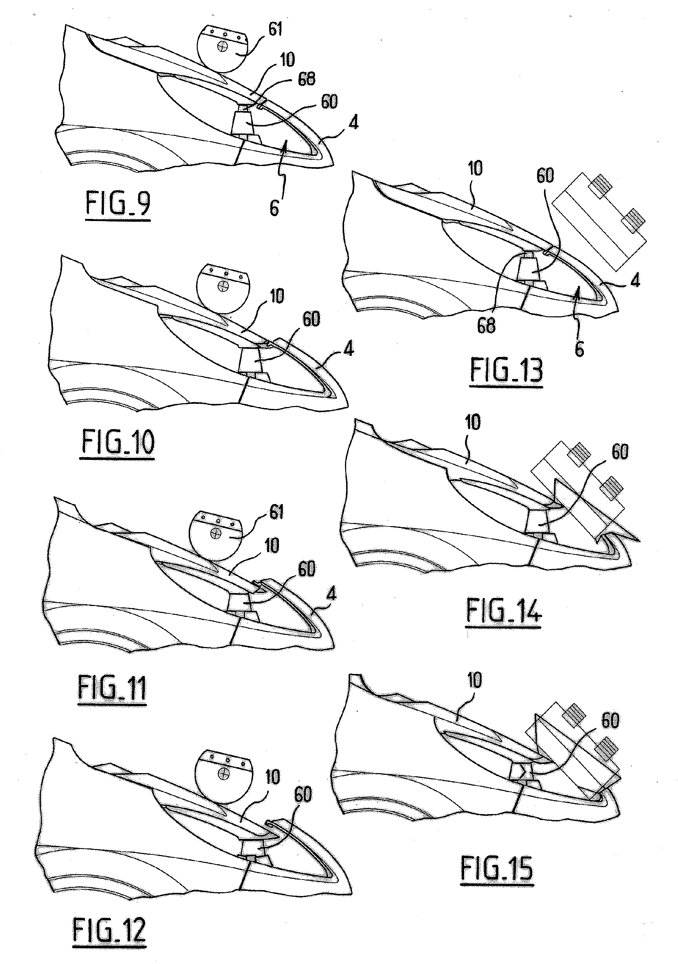

On a ainsi illustré aux figures 9 à 12 la cinématique du comportement du véhicule lors d'un test normalisé simulant le choc de la tête d'une enfant avec le véhicule. Comme on le voit à la figure 9, le capot 10 est initialement en appui sur l'amortisseur 68. Lors d'un impact avec la masse de référence 61, c'est tout d'abord l'amortisseur 68 qui est comprimé ici suivant la direction verticale de sorte que le capot vient pratiquement en contact avec la face supérieure des butées 60, comme illustré à la figure 10. Cela absorbe une première partie de l'énergie du choc. Puis les efforts deviennent suffisants pour écraser les butées 60, comme illustré à la figure 11. Enfin, le capot continue sa course vers le bas en s'enfonçant et la butée se rompt en absorbant une quantité supplémentaire d'énergie.

Les figures 13 à 15 simulent la cinématique du comportement du véhicule lors d'un choc normalisé représentant la rencontre de la hanche d'un piéton avec le véhicule. Dans ce cas, le choc a lieu davantage vers l'avant du véhicule que dans le précédent test, à la limite du capot 10 et de la partie supérieure de la calandre 4 ou du pare-chocs. On observe le même comportement, à savoir que chaque amortisseur 68 se trouve tout d'abord écrasé, puis ce sont les butées 60 qui s'écrasent avant de se rompre pour absorber une quantité supplémentaire d'énergie. Au cours du choc, la calandre et le support de calandre se rompent.

Suivant le profil du véhicule, le capot interviendra lors du choc ou au contraire n'interviendra pas.

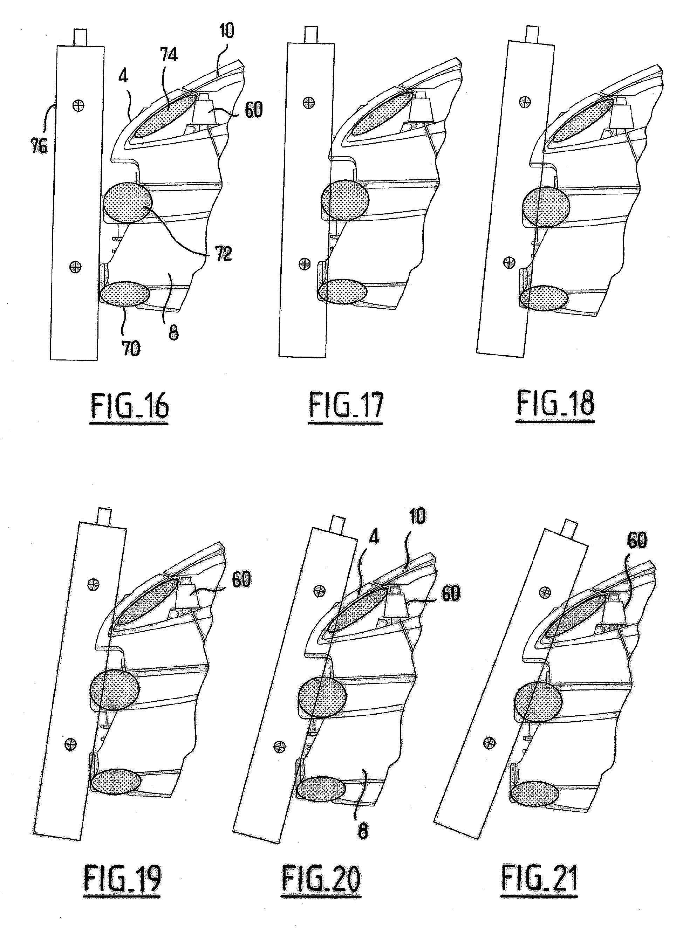

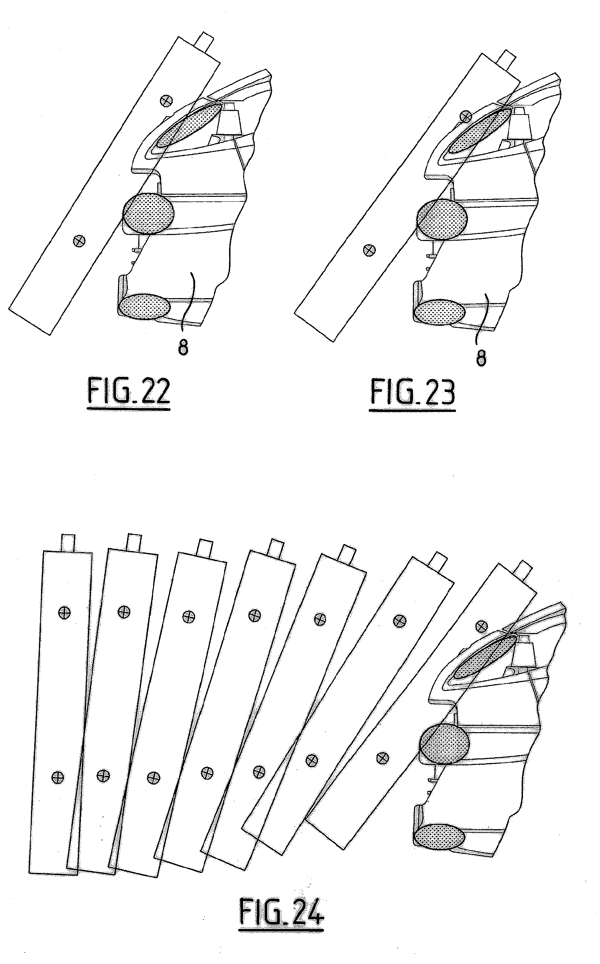

La cinématique d'un choc contre un tibia de piéton est illustrée aux figures 16 à 24. Dans le présent exemple, le support de calandre, comme on l'a vu, constitue un point rigide en partie haute qui vient s'ajouter aux deux points d'appui générés par le pare-chocs en partie médiane et en partie basse. Comme illustré à la figure 16, on distingue donc un point d'appui bas 70, un point d'appui médian 72 et un point d'appui supérieur 74.

Ces trois points permettent à la jambe représentée par la masse 76 sur les figures de basculer progressivement au cours du choc. Ainsi, le choc a lieu tout d'abord contre les points inférieur 70 et médian 72 qui se compriment dans une certaine mesure sous l'effet du choc, comme illustré à la figure 17. Puis s'amorce le basculement de la jambe en direction du capot, de sorte que la partie basse de la jambe s'éloigne du point inférieur 70 et que sa partie haute se rapproche du point supérieur 74, comme illustré sur les autres figures. Le point de rotation est globalement situé autour du point médian 72. Le début de l'appui de la jambe sur le point supérieur constitué par le support de calandre dans notre exemple a lieu à la figure 19. Le point rigide fourni par le support de calandre en partie haute permet d'améliorer la gestion du choc contre la jambe en provoquant un contact haut avec la jambe et permet ainsi de limiter le cisaillement au niveau du genou.

Ainsi, pour amortir les chocs, les butées 60 et 62 viennent s'écraser lorsque l'effort est trop important, permettant ainsi de réduire la force de l'impact avec un piéton. Ces butées sont d'une seule pièce avec le support 6 qui les porte. Le matériau dont elles sont constituées se déforme et se casse au cours du choc. Ces déformations et ces ruptures consomment de l'énergie. Il y a donc absorption d'énergie au cours du choc. Le support 6 sera réalisé en matière plastique ou en matériau composite, par exemple en matière thermoplastique chargée au moyen de fibres telles que des fibres de verre. L'absorption d'énergie permet de limiter la course de débattement de l'élément de carrosserie constitué ici par le capot 10 et ainsi de limiter l'accélération que subit le piéton.

Lors du choc avec le piéton, la partie du piéton qui va heurter la zone de la carrosserie au droit de la zone amortissante déforme d'abord l'élément de carrosserie jusqu'à arriver au contact de la butée. Au cours de cette déformation, elle écrase l'amortisseur assurant la fonction de surcourse. Une fois les jeux ou les débattements de surcourse dépassés, l'élément de carrosserie déforme la butée qui s'écrase et se casse sous un certain effort. Lorsque ce dernier est atteint, la butée absorbe l'énergie en se déformant ou en cassant et ralentit donc l'intrusion du piéton dans l'avant du véhicule jusqu'à ce qu'il rencontre un point dur de la structure du véhicule ou jusqu'à dissipation de l'énergie d'impact. Les butées sont conçues dans leur forme et leur épaisseur pour que le niveau d'effort pour les déformer et les casser reste proche du niveau initial nécessaire pour débuter leur fonctionnement, niveau qui permet ainsi de limiter l'accélération subie par le piéton.

La partie la plus haute des nervures principales 26 ainsi que les platines 32 forment elles aussi des zones amortissantes pouvant s'écraser et se casser lors d'un choc descendant, voire vertical, contre l'avant du véhicule, à savoir contre le capot 10 ou la calandre 4.

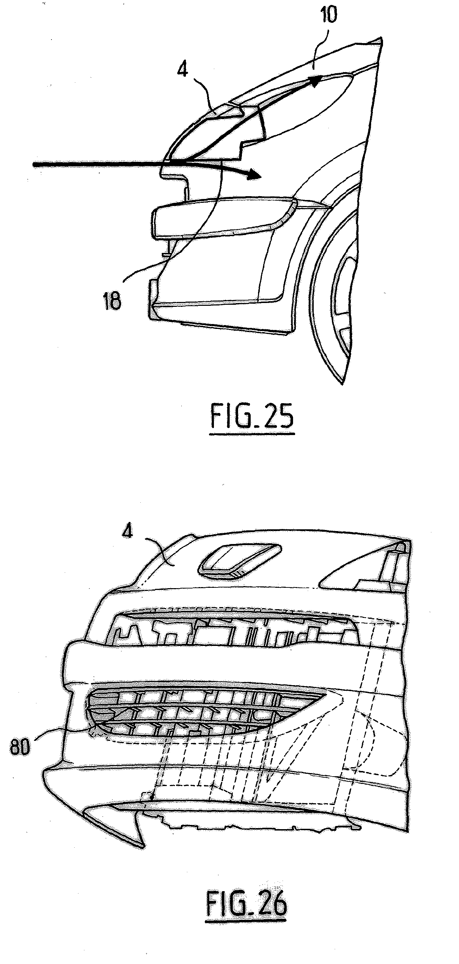

Dans le présent exemple, comme illustré à la figure 25, la forme de la paroi inférieure 18 du support 4 lui permet de canaliser l'air entrant dans le véhicule, en direction du radiateur du véhicule. En effet, cette paroi 18 étant au-dessus de la grille 80 d'entrée d'air dans le véhicule, cette paroi évite le passage de l'air en partie supérieure et notamment son intrusion entre la traverse de façade avant technique et le capot. Le support 6 canalise ainsi l'air en l'empêchant de remonter et de passer sous le capot.

Le support avec les butées peut être constitué en un des matériaux suivants :
- du polypropylène ou un autre matériau thermoplastique tel que du polyamide ;
- du polypropylène chargé de talc ;
- du polypropylène chargé de fibres de verre ; ou
- un matériau thermodurcissable chargé de fibres de verre.

Les butées 60 pourront avoir les dimensions suivantes : hauteur = 50 mm, longueur = 40 mm, largeur = 40 mm. Les groupes de caissons formés par les platines 32 pourront avoir une hauteur de 50 mm et une largeur de 40 mm. Leur longueur pourra être située entre 20 et 500 mm s'ils sont d'une seule pièce. La largeur de la paroi inférieure 18 formant un porte-à-faux sera située par exemple entre 100 et 400 mm selon le style du véhicule.

Bien entendu, on pourra apporter à l'invention de nombreuses modifications sans sortir du cadre de celle-ci.

L'invention ainsi s'applique tout aussi bien à un support de façade avant technique, un support de serrure, un support de calandre ou de softnose, une doublure de capot, un support d'aile ou un support de pare-chocs.

On pourra mettre en oeuvre le point rigide supérieur formé par la partie avant du support indépendamment de la présence des butées 60 et 62.

On observera que si les butées sont fixées au support de l'élément de carrosserie formé par la calandre, elles servent à amortir le choc d'un piéton contre un autre élément de carrosserie, à savoir le capot. Dans un autre mode de réalisation, elles pourraient servir à amortir le choc contre le même élément de carrosserie que celui porté par le support.

La butée pourra être unique et occuper une position centrale sur le support.

La butée assurant la fonction de déformation puis de rupture pendant un choc piéton pourra être constituée par l'ensemble du support lui-même. Le support sera alors dimensionné de façon adaptée.

## Revendications

1. Véhicule (2) comprenant :
- au moins un élément de carrosserie ; et
- au moins une butée située à une hauteur supérieure à celle d'une poutre de pare-chocs du véhicule (10),
**caractérisé en ce que** la butée (60, 62) ou au moins l'une des butées est agencée pour s'écraser en cas de choc d'un piéton contre l'élément de carrosserie en direction de la butée.

2. Véhicule selon la revendication précédente, **caractérisé en ce que** la butée (60, 62) ou l'une au moins des butées est en matériau plastique ou composite.

3. Véhicule selon l'une quelconque des revendications précédentes, **caractérisé en ce qu'**il présente un espace entre la butée (60, 62) ou l'une au moins des butées et l'élément de carrosserie (10).

4. Véhicule selon la revendication précédente, **caractérisé en ce que** l'espace est occupé au moins en partie par un amortisseur élastique (68).

5. Véhicule selon l'une quelconque des revendications précédentes, **caractérisé en ce que** les butées (60, 62) agencées pour s'écraser sont au moins au nombre de deux et par exemple au nombre de trois.

6. Véhicule selon l'une quelconque des revendications précédentes, **caractérisé en ce que** la butée ou au moins l'une (62) des butées est adjacente à une serrure du véhicule.

7. Véhicule selon l'une quelconque des revendications précédentes, **caractérisé en ce qu'**il comprend un support (6), la butée (60, 62) ou au moins l'une des butées étant d'une seule pièce avec le support (6).

8. Véhicule selon la revendication précédente, **caractérisé en ce que** le support (6) est agencé pour former un point d'appui rigide (74) pour un piéton lors d'un choc du piéton contre le pare-chocs (8) du véhicule.

9. Véhicule selon la revendication précédente, **caractérisé en ce que** le support (6) est agencé pour que le point d'appui (74) fasse basculer le piéton sur le véhicule.

10. Véhicule selon l'une quelconque des revendications 8 ou 9, **caractérisé en ce que** le support comprend des nervures avant planes verticales (24) parallèles à la direction de marche du véhicule et formant le point d'appui (74).

11. Véhicule selon la revendication précédente, **caractérisé en ce que** les nervures (24) étant des nervures principales, le support (6) comprend des nervures secondaires (44) contiguës aux nervures principales et non parallèles à ces dernières.

12. Véhicule selon l'une quelconque des revendications 7 à 11, **caractérisé en ce que** le support (6) comprend des nervures arrières (48).

13. Véhicule selon l'une quelconque des revendications 7 à 12, **caractérisé en ce que** le support (6) est agencé pour canaliser sous le support un flux d'air entrant dans le véhicule.

14. Véhicule selon l'une quelconque des revendications 7 à 13, **caractérisé en ce que** le support (6) est fixé à une façade avant technique (14) du véhicule.

15. Véhicule selon l'une quelconque des revendications 7 à 14, **caractérisé en ce que** le support est en appui sur une façade ou une pièce de structure du véhicule.

16. Véhicule selon l'une quelconque des revendications 7 à 15, **caractérisé en ce que** le véhicule comprend une peau de pare-chocs (8) fixée au support (6).

17. Véhicule selon l'une quelconque des revendications 7 à 16, **caractérisé en ce que** le support (6) est l'une des pièces suivantes :
- une doublure de capot ;
- une façade avant technique ;
- un support de serrure ; et
- un support d'aile.

18. Véhicule selon l'une quelconque des revendications 7 à 17, **caractérisé en ce que** le support (6) est un support de calandre (6).

19. Support d'élément de carrosserie faisant partie d'un véhicule selon l'une quelconque des revendications 7 à 18 et tel qu'énoncé dans l'une quelconque des revendications 7 à 18.
